# EUROPEAN PATENT APPLICATION

(11) **EP 1 704 776 A1**
(43) Date of publication of application: **27.09.2006**
(21) Application number: 05018445.6
(22) Date of filing: 25.08.2005
(51) Int. Cl.: A01K 61/02

(54) **A feeder and a feeding method protecting feedstuff from moisture**

(30) Priority: 21.03.2005 CN 200510033799
(71) Applicant: Shenzhen Xing Risheng Industrial Co., Ltd., Baolong Industry City, Longgang, Shenzhen, 518118 (CN)
(72) Inventor: Deng, Peixing, Longgang Shenzhen 518118 (CN)
(74) Representative: Grättinger & Partner (GbR)

(57) **Abstract**

A feeder and a feeding method that can prevent feedstuff from moisture, comprises a base (1), a feedstuff box (31) with a feedstuff discharging port which can be driven to rotate; especially the said feedstuff box (31) comprises a flap (32) that can cover the said feedstuff discharging port. The said flap cover can be opened automatically when the feedstuff box rotates to the position that its discharge port is facing downwards, i.e. it is in the discharging status, and will be kept closed when the said discharge port facing upwards, i.e. it is not in the said discharging status. Said feedstuff port flap (32) is assembled onto the feedstuff box (31) by way of a shaft (37) that is parallel to the rotating axial of said feedstuff box, with a counterweight (35) assembled on its heavier side. Inside said feedstuff box (31) comprises at least a rim (36) on its sidewall, so feedstuff will strike with the rim to eliminate agglomeration when rotating. Especially for aquatic fishes feeding, the said feeder or feeding method can prevent the fish feedstuff located over fish tanks from agglomeration, which ensuring the automatic or accurate discharging of the feedstuff. The above measures are low cost and easy to take.

## Description

### Field of the invention

The current invention relates to feeders, especially feeders for feeding aquatic fishes or animals at set time or at random time; especially relates to moisture proof foodstuff box structure and feeding method.

### Background of the invention

Together with rising of the pets breeding and raising as well as home aquariums and pet cages entering into families day by day, devices for feeding the animals at set time or at ration are being popularized.

The Chinese paterit 94220518.9 and 99238949.6 disclose feeding devices for feeding at set time by automatically falling the feedstuff, and the later invented electronic feeders which employ electronic controlling circuit, make it easier automatic feeding and accurate time setting, thus grant animal keepers more convenience. The Chinese patent 03261731.3 discloses such an electronic feeder that can discharge feedstuff at set time or at any time. The shell of said feeder comprises a base, a front cover, a base plate and a feedstuff box with an opening on its bottom; inside said shell there installs a control seat, which includes a circuit board, a left and a right seat block, a motor and a group of gears. Working fundamentals of said feeder is as follows: two control buttons on said base can be used to select running mode of said motor from set time mode and any time mode, said motor will drive said feedstuff box to rotate simultaneously. When the feedstuff discharging port faces downwards, feedstuff will be discharged; by controlling a cam in the driving gear shaft to make it contact with a micro-switch when it rotates to a pre-set point, said motor will be stopped, thus feedstuff can be discharged at set time or at any time.

Disadvantages of the above-mentioned prior art are: in order to automatically and expeditely discharge feedstuff, the discharge port of said feedstuff box is always open, so, the feedstuff tends to catch moisture in the atmosphere and form agglomeration, especially during wet days; fish feedstuff in the feedstuff boxes located over fish tanks especially is easier to be affected by moisture to be wet and agglomerate. Such agglomerated feedstuff may obstruct the discharging port or the quantitative charging port, making automatic or accurate discharging of the feedstuff impossible.

### Summary of the invention

What the current invention aims to solve is to avoid the disadvantages of the above-mentioned prior art by presenting a feeder that can prevent feedstuff from wetness and agglomeration owing to moisture, thus ensuring the feedstuff to be automatically and accurately discharged. Measures taken in the current invention are low cost and easy to be realized.

In order to solve the problems in the above-mentioned technology, the current invention has following ideas: install a flap covering over the discharging port of the feedstuff box, the said flap cover can be opened automatically when the feedstuff box is in the discharging status and kept closed when not in the said discharging status. So, it is designed that the said flap will cover the said port by its own weight when the feeder is in the non-discharging status and its feedstuff discharging port is upward. When the said feeder is to discharge feedstuff, the said feedstuff box will rotate to the position that its discharge port facing downwards and the said flap will be opened automatically by its own weight.

The first embodiment of the current invention is to supply a feeder that can prevent feedstuff from moisture that comprises a base, in which there is power that can drive a feedstuff box with a feedstuff discharging port to rotate; especially the said feedstuff box comprises a flap that can cover the said feedstuff discharging port.

In the above-mentioned embodiment, said feedstuff port flap is assembled onto the feedstuff box by way of a shaft that is parallel to the rotating shaft of said feedstuff box, and the two sides of said flap measured by the said shaft are not balanced in weight i.e., one side is heavier than the other side.

In the above-mentioned embodiment, there is a feedstuff charging control button on the outside of the said feedstuff box, the said feedstuff charging control button is connected with the charging baffle board inside the feedstuff box, so to control feedstuff amount discharged through the port each time by adjusting the tiling degree of the said baffle board via the said control button.

In the above-mentioned embodiment, comprising at least a rim inside said feedstuff box on its sidewall.

The second-embodiment of the current invention is to supply a feeding method that can prevent feedstuff from moisture, which is used for electronically controlled feeder that comprises a base, in which there is power that can drive a feedstuff box with an feedstuff discharging port to rotate; said feedstuff box is equipped with a flap for covering the said feedstuff discharging port; procedures comprise:
a. said feedstuff box has said feedstuff port basically upwards, said flap covers the said feedstuff port;
b. the electronic controlling circuit gives off instructions to make said feedstuff box rotate;
c. the powered driving mechanism inside said base drives said feedstuff box to rotate to a position-that the said feedstuff port basically faces downwards, said flap will open as it's rotating together with the feedstuff box then the feedstuff falls out from the said feedstuff port;
d. said feedstuff box further rotates in the same or reverse direction to the position that said feedstuff port faces upwards, and said flap will cover the said feedstuff port; procedure a. will be repeated.

Compared with the prior art, advantages of the current invention are as follows: at most time said feeder is not in feedstuff discharging status and the said feedstuff box keeps closed, which prevent feedstuff from agglomerating owing to humidity and facilitate automatically and accurately discharging of feedstuff; furthermore, the measures are low cost and easy to take.

### Brief description of drawings

Fig.1 shows a feeder in its original status
Fig.2 shows a feeder in its discharging status
Fig.3 shows the exploded view of a feeder structure
Fig.4 shows the internal structure of a feedstuff box
Fig.5 shows the internal structure of a feedstuff box
Where: 1 - base, 11 - control keys, 2 - connecting seat, 31 - feedstuff box, 32 - flap on the discharging port, 33 - feedstuff charging control button, 34 - feedstuff charging baffle board, 35 - counterweight, 36 - rib, 37 - shaft, 38 - feedstuff baffle board, 39 - limit device.

### Detailed description of the preferred embodiment

The preferred embodiment of the current invention is further described together with the attached drawings as following.

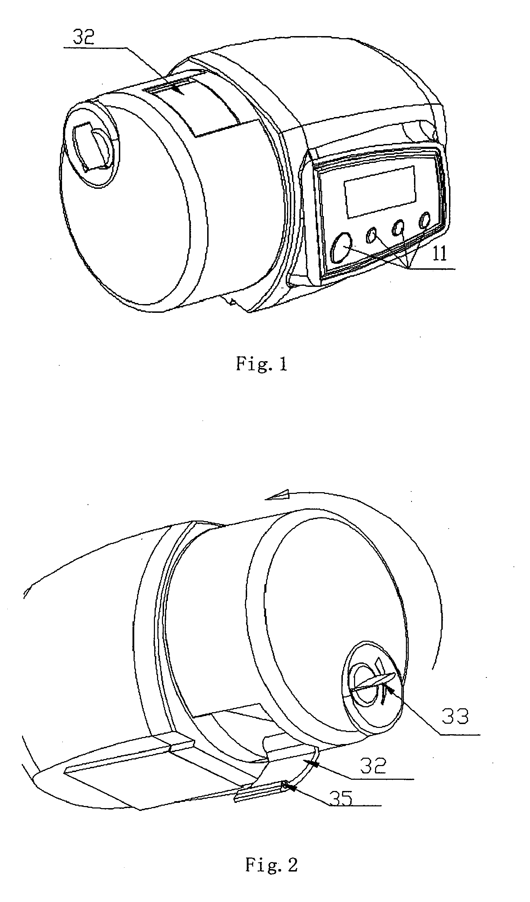

The feeder of current invention comprises a base 1 , in which there is power that can drive a feedstuff box with an feedstuff discharging port to rotate. Said base 1 can drive said feedstuff box 31 to rotate by power driving a connecting seat 2; said base 1 and said connecting seat 2 are in diversified designs in the existing technology, thus detailed description is omitted here. Said feedstuff box 31 can rotate slowly and continuously for one turn in a pre-set time period, or rotate intermittently, stopping temporarily when the feedstuff discharging port faces downwards and then continues to rotate in the same or reverse direction until the feedstuff discharging port faces upwards and remains there to the next discharging period. Both Fig.1 and Fig.2 show the working status of said feeder. Fig.1 shows its original status and Fig.2 shows its discharging status, i.e., the said feedstuff discharging port faces downwards.

The current invention of feeder is characterized by said feedstuff box 31 comprising a flap 32 that can cover the said feedstuff discharging port, the original status of said flap is shown in Fig.1, i.e., covering the discharging port; when the feeder is in the feedstuff discharging status, said flap 32 will be opened automatically for facilitating the discharge of feedstuff.

Thus, the current invention presents a feeding method that can prevent feedstuff from wetting, which is used for electronically controlled feeder that comprises a base 1, ,in which there is power that can drive a feedstuff box with an feedstuff discharging port to rotate; said feedstuff box 31 is equipped with a flap 32 for covering the said feedstuff discharging port; procedures comprise:
a. said feedstuff box has said feedstuff port basically upward, said flap covers the said feedstuff port;
b. the electronic controlling circuit gives off instructions to make said feedstuff box rotate;
c. the powered driving mechanism inside said base drives said feedstuff box to rotate to a position that the said feedstuff port basically faces downwards, said flap will open as it's rotating together with the feedstuff box then the feedstuff falls out from the said feedstuff port;
d. said feedstuff box further rotates in the same or reverse direction to the position that said feedstuff port faces upwards, and said flap will cover the said feedstuff port; procedure a. will be repeated.

During the above procedures, the said instructions in the procedure b. can be given off at pre-set time by manually setting the control circuit, or at any time by manually manipulating the control circuit.

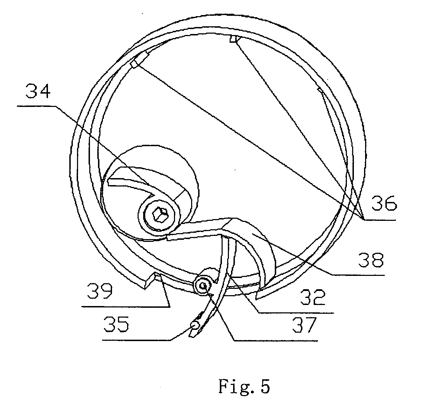

In order to ensure the said flap 32 works without any malfunction, said flap 32 can be installed onto the feedstuff box 31 by way of a shaft 37 that is basically parallel to the rotating axial of the said feedstuff box, and the two sides of said flap measured by the said shaft are not balanced in weight i.e., one side is heavier than the other side as shown in Fig.5. Said flap 32 can have a counterweight 35 assembled on its heavier side measured by said shaft.

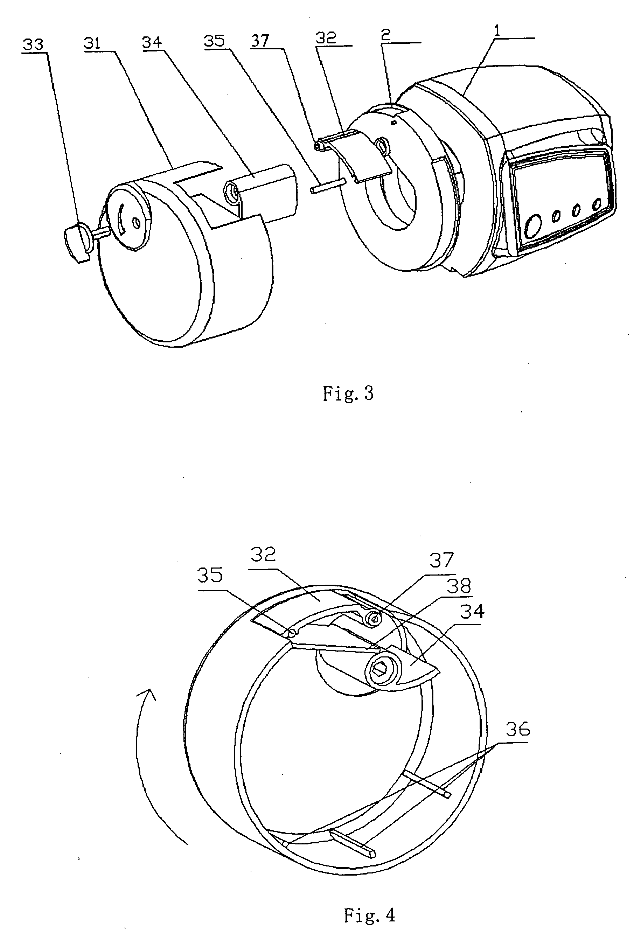

Both Figl.2 and Fig.3 show another assembling way of the said flap 32, i.e., said flap 32 has its one side connected to the rotating shaft 37 assembled onto the said feedstuff box 31, said shaft 37 is basically parallel to the rotating axial of said feedstuff box 31. said shaft 37 can rotate around the recess on the connecting seat 2 or feedstuff box 31 as its supporting point; or rotate in an open sleeve assembled on the connecting seat 2 or the feedstuff box 31. Said flap 32 can have a counterweight 35 attached on its other side respective to the said shaft 37.

Said counterweight 35 can be a weight block or a weight rod made of lead or tin. Said counterweight 35 can be inserted into the recess of the said flap 32, or fixed onto said flap 32 by screws or glue. Said feedstuff box 31 can also comprise a position limiting device 39 on one side of said feedstuff port to ensure covering the said feedstuff port in case that the said feedstuff box 31 is in the original position of said port basically upwards, as shown in Fig.5. Said position limiting device 39 also comprises slope edges to match with the said flap 32. For reasons of reference to the existing technology, details are omitted.

Fig.3 is an exploded view of the feeder of current invention, it can be seen that there is a feedstuff charging control button 33 on the outside of the said feedstuff box 31, the said feedstuff charging control button 33 is connected with the charging baffle board 34 inside the feedstuff box, so to control feedstuff amount discharged through the port each time by adjusting-the- tiling-degree-of the said- baffle board 34 via the said control button 33. Both Fig.4 and Fig.5 show that said feedstuff box 31 can also comprise a feedstuff baffle board 38, which extends from the rotating shaft end of the said feedstuff charging baffle board 34 to the side wall of the said feedstuff box 31, which forming a space inside the said feedstuff box 31 together with the said baffle board 34 for accommodating feedstuff and forming a feedstuff discharging passage extending to the port, thus shortening the length of the said baffle board 34 and making the adjustment of the said baffle board 34 easier.

Furthermore, in order to prevent feedstuff from agglomeration, the current invention sets up at least a rim 36 inside said feedstuff box 31 on its side wall, which can be a straight line as shown in Fig.4, or a curve. In this way, when said feedstuff box 31 rotates, feedstuff in it will strike with the rim to eliminate, at least reduce agglomeration. Said rim 36 can be set basically parallel to the rotating axis of the feedstuff box 31, or be set at a certain height to strengthen strike effects. Said rim 36 can also be set at an angle not 90 degrees to the rotating axis of said feedstuff box 31.

Tests on the feedstuff box in the current invention have shown that it has good function to prevent feedstuff from moisture and agglomeration. Feasibility of the current invention is excellent.

## Claims

1. A feeder that can prevent feedstuff from moisture, comprises a base (1), in which there is power that can drive a feedstuff box (31) with a feedstuff discharging port to rotate; it is **characterized by** that:
Said feedstuff box (31) comprises a flap (32) that can cover the said feedstuff discharging port.

2. The feeder that can prevent feedstuff from moisture according to claim 1 is **characterized by** that:
Said feedstuff port flap (32) is assembled onto the feedstuff box by way of a shaft (37) that is parallel to the rotating shaft of said feedstuff box, and the two sides of said flap measured by the said shaft are not balanced in weight i.e., one side is heavier than the other side.

3. The feeder that can prevent feedstuff from moisture according to claim 2 is **characterized by** that:
Said flap (32) can have a counterweight (35) assembled on its heavier side measured by said shaft (37).

4. The feeder that can prevent feedstuff-from moisture according to claim 1 is **characterized by** that:
Said flap (32) has its one side connected to the rotating shaft (37) assembled onto the said feedstuff box (31), said shaft (37) is basically parallel to the rotating axial of said feedstuff box (31).

5. The feeder that can prevent feedstuff from moisture according to claim 4 is **characterized by** that:
Said flap (32) can have a counterweight (35) attached on its other side respective to the said shaft (37).

6. The feeder that can prevent feedstuff from moisture according to claim 3 or 5 is **characterized by** that:
Said counterweight (35) can be a weight block or a weight rod made of lead or tin.

7. The feeder that can prevent feedstuff from moisture according to claim 1 is **characterized by** that:
There is a feedstuff discharging control button (33) on the outside of the said feedstuff box (31), the said feedstuff discharging control button (33) is connected with the discharging baffle board (34) inside the feedstuff box, so to control feedstuff amount discharged through the port each time by adjusting the tiling degree of the said baffle board (34) via the said control button (33).

8. The feeder that can prevent feedstuff from moisture according to claim 1 is **characterized by** comprising:
At least a rim (36) inside said feedstuff box (31) on its sidewall; Said rim (36) can be set at an angle not 90 degrees to the rotating axis of said feedstuff box (31).

9. A feeding method that can prevent feedstuff from moisture, which is used for electronically controlled feeder that comprises a base (31), in which there is power that can drive a feedstuff box (31) with an feedstuff discharging port to rotate; said feedstuff box (31) is equipped with a flap (32) for covering the said feedstuff discharging port; procedures comprise:
a. said feedstuff box has said feedstuff port basically upwards, said flap covers the said feedstuff port;
b. the electronic controlling circuit gives off instructions to make said feedstuff box rotate;
c. the powered driving mechanism inside said base drives said feedstuff box to rotate to a position that the said feedstuff port basically faces downwards, said flap will open as it's rotating together with the feedstuff box then the feedstuff falls out from the said feedstuff port;
d. said feedstuff box further rotates in the same or reverse direction to the position that said feedstuff port faces upwards, and said flap will cover the said feedstuff port; procedure a. will be repeated.

10. The feeding method that can prevent feedstuff from moisture according to claim 9, is **characterized by** that:
The said instructions in the procedure b. can be given off at pre-set time by manually setting the control circuit, or at any time by manually manipulating the control circuit.
